# EUROPEAN PATENT APPLICATION

(11) **EP 3 581 923 A1**
(43) Date of publication of application: **18.12.2019**
(21) Application number: 19179052.6
(22) Date of filing: 07.06.2019
(51) Int. Cl.: G01N 23/223, C03C 13/04

(54) **METHOD FOR EVALUATING MINERAL WOOL**

(30) Priority: 08.06.2018 DE 102018004537
(71) Applicant: Saint-Gobain Isover, 92400 Courbevoie (FR)
(72) Inventor: Wagner, Eva, 67122 Altrip (DE); Schumm, Michael, 68198 Schriesheim (DE); Wörtler, Michael, 52152 Simmerath-Dedenborn (DE)
(74) Representative: Winter, Brandl, Fürniss, Hübner, Röss, Kaiser, Polte - Partnerschaft mbB

(57) **Abstract**

A method is proposed for the evaluation of mineral wool with regard to compliance with legal requirements for exoneration in the event of renovation, whereby one or more samples are taken from the mineral wool, analyzed for their chemical composition and the evaluation is carried out on the basis of the determined composition, using simplified criteria.

## Description

The present invention relates to a method for the evaluation of mineral wool with regard to compliance with legal requirements for exemption in the event of renovation, in which one or more samples are taken from the mineral wool, their chemical composition is analyzed and the evaluation is carried out on the basis of the composition determined, in accordance with claim 1. The invention relates further to a handheld XRF spectrometer according to claim 9.

The requirements valid in Germany for the exemption of artificial mineral fibres, in particular mineral wool, are listed in Annex II No. 6 to § 16 Para. 2 of the Hazardous Substances Ordinance, in Annex 1 Entry 4 to §3 of the Chemicals Prohibition Ordinance and in Regulation (EC) No. 1272/2008. These regulations provide for a ban on the manufacture, use and placing on the market of so-called non-approved artificial mineral fibres, wherein non-compliance with one of the alternative criteria laid down in the Ordinance on Hazardous Substances or in the Ordinance on the Prohibition of Chemicals is understood to be the respective alternative criteria justifying the approval. In practice, such approved (i.e. exonerated) mineral wool is referred to as "new mineral wool", non-approved mineral wool as "old mineral wool".

In the case of remediation involving the handling of old mineral wool, the provisions of TRGS 521, which contain extensive measures for occupational health and safety, as summarized in the "Handlungsanleitung Umgang mit Mineralwolledämmstoffen (Glaswolle, Steinwolle) Ausgabe 04/2015" issued by the Berufsgenossenschaft der Bauwirtschaft (BG BAU), apply.

It is obvious that the measures of occupational health and safety result in a considerable expenditure in the presence of non-approved mineral wool, which results in significant additional costs compared to the handling of approved mineral wool. In addition, there is the problem of disposal, for new mineral wool the waste code 170604 applies according to the Waste Catalogue Ordinance, while for the old mineral wool 170603* applies, which not only entails considerable additional costs but also leads to possible shipment of such mineral fibre waste to only a very limited number of landfills with also limited capacities.

On the other hand, there is the risk that a mineral wool being found on a construction site is wrongly assumed as "new mineral wool" and that appropriate occupational health and safety measures are not applied. In fact, this is predominantly the case today. This is due to the fact that the procedures described below are time-consuming and expensive.

A fundamental problem with old and new mineral wool in this context is that they do not differ in appearance and therefore cannot be differentiated visually.

In the past, there have been various proposals to mark mineral wool as an approved material only after it has been used for several years, sometimes for decades, in the respective application by means of markings such as imprints, colored inlaid or woven threads, dyeings and the like. All these measures have not proven themselves in practice for various reasons, such as fading, becoming unrecognizable when the material is subjected to thermal stress, soiling, cost increases not accepted by the customer as a result of the measures, and have therefore not been or will not be used except in exceptional cases.

Gütegemeinschaft Mineralwolle e.V. [Quality Association for Mineral Wool e.V.] (in the following referred to as "GGM") has been offering a procedure for the evaluation of mineral wool with regard to compliance with statutory approval requirements for several years. The composition of a material sample is analyzed in a suitable stationary laboratory by means of optical emission spectrometry with inductively coupled plasma (ICP-OES). If necessary, the sample is calcined to remove organic components such as binders, coatings and the like. The analysis includes at least the main components SiO₂, Na₂O, K₂O, CaO, MgO, BaO, Al₂O₃, Fe₂O₃, TiO₂, MnO, P₂O₅, B₂O₃ and SO₃. All compositions are given in mass-%.

The GGM has various confidential fibre compositions which have fulfilled the proof of approval in accordance with the legal requirements ("tested fibres") in corresponding investigations, in particular investigations to determine the half-life after intratracheal instillation on the basis of the test specification ECB/TM 27 rev. 7. Each of these individual compositions covers an area for the individual components, which is defined in the Appendix to 3.1.2 and 3.3.3 of the GGM quality and test specifications and is colloquially referred to as the "RAL range".

The composition of the mineral wool sample determined from the analysis is compared with the component ranges of each individual fibre composition tested. If the composition determined from the analysis with all components is within the span of at least one tested fibre composition, it is a new mineral wool, otherwise it is an old mineral wool. The system offered by GGM has proven itself in practice. The main disadvantage of this method is the comparatively long time that can elapse before the evaluation is available. Depending on the circumstances of the individual case, this can last from several days to 2 weeks. With appropriate planning and lead time, this processing time is generally not an obstacle, but it can become a problem if unexpectedly mineral wool is found in the course of renovation. Furthermore, the procedure is comparatively expensive, so that there is an interest in a more cost-effective solution.

Based on this fact, the present invention has the object to provide a procedure for the evaluation of mineral wool with regard to the compliance with legal approval requirements for the case of renovation and possibly subsequent disposal, which is faster and cheaper than the known evaluation procedure, i.e. a simplified rapid test method should be provided.

On the one hand, the provision of a fast, simple and inexpensive procedure improves occupational safety and the disposal costs for new mineral wool. On the other hand, the willingness to have an analysis carried out in order to implement legally required protective measures when dealing with old mineral wool is increased. This will benefit both sides, employers and employees alike.

The above object is achieved by a method with the characterizing features of claim 1.

In particular, the present invention relates to a method for evaluating mineral wool with regard to compliance with legal requirements for exemption, wherein one or more samples are taken from the mineral wool, their chemical composition is analyzed and the evaluation is carried out on the basis of the determined composition, wherein a mineral wool sample is evaluated as approved for the case of remediation and possibly subsequent disposal, if either:
a) the SiO₂ content < 70 mass-% and the Al₂O₃ content > 16.5 mass-% or
b) the SiO₂ content < 70 mass-% and the Al₂O₃ content < 4 mass-% or
c) the SiO₂ content > 70 mass-% and the Al₂O₃ content < 2.2 mass-% and the sum value (CaO + MgO) > 15 mass-%;
all data being based on a normalized residual analysis without Na₂O and without B₂O₃ in mass-%.

Typically, for the purpose of the present invention, the term "chemical composition" has to be understood as being the qualitative and quantitative detection of at least the following oxides:
SiO₂, K₂O, CaO, MgO, BaO, Al₂O₃, Fe₂O₃, TiO₂, MnO, P₂O₅, and SO₃.

Although, in principle also the oxides Na₂O and B₂O₃ could be detected, the achieved composition is normalized into a Na₂O- and B₂O₃-free composition by removing the components Na₂O and B₂O₃ from the chemical composition of the fibres to be analyzed, e.g. in accordance with table 1 below.

Dependent claims contain preferred embodiments of the invention.

A preferred embodiment of the present invention is a method wherein the evaluation of the analysis result is carried out by means of a computer-aided system which is directly network-coupled with or integrated in a mobile analysis apparatus. This has the advantage that an easy documentation, e.g. together with corresponding GPS-data could be achieved.

A further preferred method in accordance with the present invention is one wherein the result of the evaluation is displayed in form of an acoustic and/or an optical signal. Such measures have the advantage of an easy presentation of the analytical results, which do not require a chemist at the location. Moreover, the analyses simply gives an "approved"/"non-approved" response, so that the construction workers can easily decide on the basis of the shown result whether the mineral fibres belong to old or new mineral wool type.

In a further preferred method of the present invention, an X-ray fluorescence method (XRF) is used as the analysis method. The XRF is a method used for a long time for the quantitative analysis of components made of inorganic oxides, such as glasses, rock melts, ceramics, and particularly artificial fibre materials made of these inorganic oxides. The XRF-method is easy to calibrate by means of standard oxide mixtures, which are also commercially available.

For the matter of time saving and convenience, the present invention makes use of mobile, preferably handheld XRF spectrometers, which meanwhile are offered on the market at reasonable prices and in robust quality, so that they can be operated even under the rough conditions of construction sites.

Alternatively, the mobile analysis apparatus, in particular XRF-spectrometer, can be mounted on a vehicle.

As a further alternative, a stationary XRF-method can be used as a preferred embodiment of the present invention. This is advantageous because in case further chemical analytical tools and/or supplemental compound analysis are considered to be necessary, a full back-up laboratory immediately is available.

The above object is further achieved by a handheld XRF spectrometer according to claim 9.

The method of the present invention for evaluating mineral wool with regard to compliance with legal requirements for exemption, wherein one or more samples of mineral wool are taken and analyzed for their chemical composition, realizes the object by preferably carrying out the chemical analysis at the place of sampling using mobile analysis equipment. In this context, the place of sampling is understood to be a spatial proximity which makes the dispatch of the sample unnecessary.

As mentioned above, the mobile analysis apparatus is preferably an X-ray fluorescence method (XRF). This method is characterized by a low expenditure of additional components and space and is comparatively inexpensive. The components of the mineral fibres in question are determined, for example, in accordance with DIN 51001, "Testing of oxidic raw materials and basic materials - General bases of work for X-ray fluorescence method (XRF)".

Preferably, a handheld XRF spectrometer is used as the mobile analysis apparatus.

Alternatively, the mobile analysis equipment can be mounted on a vehicle that drives to the sampling site, for example to a construction site. In this case it is a "rolling laboratory" with the equipment required for the analysis.

To improve the accuracy of the analysis result, the specimen must be structurally adapted to the reference standard. In principle, powder-based standards are conceivable here; alternatively, a fibrous reference standard stuffed in measuring cups might also be considered. Powder-based reference standards allow better analytical accuracy, but require sample preparation in the form of grinding, which is preferred especially in the case of the "rolling" laboratory. Mobile hand-held instruments with a stuffing reference standard make it possible to dispense with this additional step in sample preparation. Of course, in addition to a hand-held XRF spectrometer with powder reference standard, a mobile sample grinding device can also be provided.

A fundamental disadvantage of the X-ray fluorescence method is that, depending on the type-dependent sensitivity below a certain threshold value, the methods are "blind" to two components typically occurring in mineral wool, namely Na₂O and B₂O₃. In stationary X-ray fluorescence apparatus, the threshold value for the Na₂O component has been reduced by the use of equipment to such an extent that reproducible measured values can be obtained for stone wool with Na₂O contents of up to 2 mass-% relative to the fibre mass, which are usual in practice. For the component B₂O₃, the threshold value is so high that B₂O₃ usually has to be determined for boron-containing mineral wool, especially glass wool, using an alternative analysis method, e.g. a chemical wet analysis. This can be done, e.g. following the procedure laid down in DIN 51086 Part 2, "Testing of oxidic raw materials and materials for ceramics, glass and glazes - Part 2: Determination of Ag, As, B, Ba, Be, Bi, Ca, Cd, Ce, Co, Cr, Cu, Er, Eu, Fe, La, Mg, Mn, Mo, Nd, Ni, P, Pb, Pr, S, Sb, Se, Sn, Sr, Ti, V, W, Y, Yb, Zn, Zr by optical emission spectrometry with inductively coupled plasma (ICP OES)".

Although manual XRF spectrometers could be used to determine higher Na₂O contents depending on the instrument used, practical tests have shown that the reproducibility of the values is not sufficient in the 12-18 mass-% range typical for glass wool. In order to meet the requirements of a simplified rapid test procedure with evaluation, a standardized residual analysis without consideration of Na₂O and B₂O₃ is used to evaluate the analysis results, especially for these handheld XRF spectrometers.

The applicant has at his disposal an extensive data set of more than 800 analyses, predominantly from the period from 1995, when the first national regulations on exemption came into force, to the entry into force in 2000 of the legal regulations described above, which was used as the data basis for defining the assessment criteria.

Of the more than 800 compositions available, about 560 analyses concern B₂O₃-free stone wool, of which about 410 compositions are marked as "approved" and about 150 compositions as "non-approved". Approximately 280 compositions concern boron-containing glass wool, of which about 140 compositions have been approved, about 100 compositions have not been approved and 40 compositions cannot be assigned.

For this purpose, these compositions, which are available as full analyses with at least the components SiO₂, Na₂O, K₂O, CaO, MgO, BaO, Al₂O₃, Fe₂O₃, TiO₂, MnO, P₂O₅, SO₃ and, if applicable, B₂O₃ in the case of glass wool, were converted from the respective composition into a standardized Na₂O- and B₂O₃-free composition by removing the components Na₂O and B₂O₃ from the fiber composition and linearly scaling the content of the remaining components.

This conversion is exemplarily carried out in the following table for a fiber composition.

**Table 1: Conversion of an exemplary full analysis of a fibre composition into a Na₂O- and B₂O₃-free standardized residual analysis**

| Component | Fiber composition ¹⁾ [mass-%] | Na₂O and B₂O₃-free ²⁾ [mass-%] |
|---|---|---|
| SiO₂ | 57,3 | 81,0 |
| Na₂O | 17,1 | |
| K₂O | 0,4 | 0,6 |
| CaO | 7,8 | 11,0 |
| MgO | 3,7 | 5,2 |
| Al₂O₃ | 0,8 | 1,1 |
| B₂O₃ | 12,0 | |
| BaO | 0,3 | 0,4 |
| Fe₂O₃ | 0,1 | 0,1 |
| TiO₂ | 0,05 | 0,1 |
| SO₃ | 0,15 | 0,2 |
| MnO | 0,2 | 0,3 |
| P₂O₅ | 0 | 0 |
| Other | 0,1 | 0,1 |
| Total | 100 | 100 |
| Basis (total excluding Na₂O und B₂O₃) | | 70,9 |

| | | |
|---|---|---|
| ¹⁾ typical composition of a so-called Ki40 fiber in the period 1995-2000 ²⁾approved in accordance with criterion c) above, i.e. SiO₂ content > 70 mass-% and Al₂O₃ content < 2.2 mass-% and the sum value (CaO + MgO) > 15 mass-%. | | |

On the basis of this database, a cluster analysis was carried out, which in the result made it possible to derive a simplified evaluation criterion for the case of remediation with subsequent disposal of the mineral wool.

Thus an evaluation of a mineral fibre sample can be carried out as approved for the case of remediation and, if necessary, subsequent disposal, if either:
a) SiO₂ content < 70 mass-% and Al₂O₃ content > 16.5 mass-% or
b) the SiO₂ content < 70 mass-% and the Al₂O₃ content < 4 mass-%; or
c) SiO₂ content > 70 mass-% and Al₂O₃ content < 2,2 mass-% and sum value (CaO + MgO) > 15 mass-%;
all data being based on a normalized residual analysis without Na₂O and without B₂O₃ in mass-%.

The Na₂O- and B₂O₃-free, standardized analysis results/residual analysis of the mobile analysis apparatus are directly compared with the three independent, nonoverlapping criteria. If one of the three criteria is met, the residual analysis and thus the mineral wool sample is considered to be approved.

It is preferable that the comparison is carried out with a computer-supported system which is directly network-coupled with or integrated into the mobile analysis apparatus. An acoustic or optical signal can be selected as feedback, such as a green signal light for the evaluation case "approved" and a red signal light for the evaluation case "non-approved".

Independent protection is claimed for a handheld XRF spectrometer according to claim 9 for performing the method of the present invention, where the handheld XRF spectrometer has an integrated analysis evaluation and acoustic and/or optical signaling devices for outputting the evaluation result. Acoustic signaling devices can be signal tones or voice messages. Optical signals by corresponding text messages can be shown on an integrated display, and can be "approved" in the form of a green signal light for the respective assessment case and a red signal light can be displayed in case of an assessment as "non-approved".

For carrying out the present invention, a number of handheld XRF spectrometers are meanwhile commercially available, e.g. the Linux operated OLYMPUS Vanta, C-Series, 4-Watt-X-ray tube with Ag-anode, and an acceleration voltage of 8-50 kV.

With such a handheld XRF spectrometer, it is easy at the location of the construction site to evaluate a mineral wool with regard to compliance with statutory requirements for exemption, under the chemical composition criteria described above, i.e. to carry out a simple evaluation of a sample of a certain mineral wool as "approved/non-approved".

## Claims

1. Method for evaluating mineral wool with regard to compliance with legal requirements for exemption, wherein one or more samples are taken from the mineral wool, their chemical composition is analyzed and the evaluation is carried out on the basis of the determined composition, **characterized in that** a mineral wool sample is evaluated as approved for the case of remediation and possibly subsequent disposal, if either:
a) the SiO₂ content < 70 mass-% and the Al₂O₃ content > 16.5 mass-% or
b) the SiO₂ content < 70 mass-% and the Al₂O₃ content < 4 mass-% or
c) the SiO₂ content > 70 mass-% and the Al₂O₃ content < 2.2 mass-% and the sum value (CaO + MgO) > 15 mass-%;
all data being based on a normalized residual analysis without Na₂O and without B₂O₃ in mass-%.

2. Method according to claim 1, **characterized in that** the evaluation of the analysis result is carried out by means of a computer-aided system which is directly networked with or integrated in a mobile analysis apparatus.

3. Method according to claim 1 or 2, **characterized in that** the result of the evaluation is displayed in the form of an acoustic and/or an optical signal.

4. Method according to anyone of claims 1 to 3, **characterized in that** an X-ray fluorescence method (XRF) is used as the analysis method.

5. Method according to claim 4, **characterized in that** a stationary X-ray fluorescence apparatus is used.

6. Method according to claim 4, **characterized in that** a mobile X-ray fluorescence apparatus is used.

7. Method according to claim 6, **characterized in that** the mobile analysis apparatus is an RFA handheld spectrometer.

8. Method according to claim 6, **characterized in that** the mobile analysis apparatus is mounted on a vehicle.

9. Handheld XRF spectrometer for carrying out the procedure according to anyone of claims 1 to 8, **characterized in that** the handheld XRF spectrometer has an integrated analysis evaluation and acoustic and/or optical signaling devices for outputting the evaluation result.
